# EUROPEAN PATENT APPLICATION

(11) **EP 4 462 888 A1**
(43) Date of publication of application: **13.11.2024**
(21) Application number: 24160654.0
(22) Date of filing: 29.02.2024
(51) Int. Cl.: H04W 52/02, H04W 76/28

(54) **APPARATUS, METHOD AND COMPUTER PROGRAM FOR MONITORING NETWORK MESSAGES**

(30) Priority: 11.05.2023 FI 20235537
(71) Applicant: Nokia Technologies Oy, 02610 Espoo (FI)
(72) Inventor: LAURIDSEN, Mads, DK-9260 Gistrup (DK); LASELVA, Daniela, 9270 Klarup (DK); KHLASS, Ahlem, 91300 Massy (FR); KOSKELA, Jarkko Tuomo, 90510 Oulu (FI)
(74) Representative: Bryers Intellectual Property Ltd

(57) **Abstract**

There is disclosed an apparatus comprising: means for receiving configuration information, the configuration information comprising at least one of a cell discontinuous transmission configuration or a network message configuration; means for performing a determination of at least one condition for monitoring for one or more network messages; and means for monitoring for one or more network messages, based at least in part on the configuration information and the determination of at least one condition.

## Description

### FIELD

The present application relates to an apparatus, method and computer program. In particular, but not exclusively, the present application relates to monitoring network messages.

### BACKGROUND

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP). 6G networks are also under discussion.

### SUMMARY

According to a first aspect there is provided an apparatus comprising: means for receiving configuration information, the configuration information comprising at least one of a cell discontinuous transmission configuration or a network message configuration; means for performing a determination of at least one condition for monitoring for one or more network messages; and means for monitoring for one or more network messages, based at least in part on the configuration information and the determination of at least one condition.

According to some examples, the determination of at least one condition comprises a determination of whether the cell is inaccessible for radio resource control idle, radio resource control inactive, or legacy devices.

According to some examples, when the cell is inaccessible the cell is barred.

According to some examples, when it is determined that the cell is inaccessible, then the means for monitoring is arranged to monitor for network messages in one or more paging occasions during cell discontinuous transmission active time.

According to some examples, when it is determined that the cell is not inaccessible, then the means for monitoring is arranged to monitor for network messages in one or more paging occasions.

According to some examples, when it is determined that the cell is not inaccessible, then the means for monitoring is arranged to monitor for network messages in one or more paging occasions during either of cell discontinuous transmission active or inactive time.

According to some examples, the determination of at least one condition comprises a determination of whether an indication has been received which indicates that the one or more network messages will be transmitted by the network during cell discontinuous transmission active time.

According to some examples, when it is determined that the indication has been received, the means for monitoring is arranged to monitor for the one or more network messages in one or more paging occasions during cell discontinuous transmission active time.

According to some examples, the received configuration information includes a paging occasion configuration for receiving one or more network messages during (i) a cell discontinuous transmission non-active time or (ii) in any paging occasion.

According to some examples, a paging cycle is configured so that paging occasions are less frequent during (i) an indicated cell discontinuous transmission non-active time, compared to (ii) any paging occasion.

According to some examples, the apparatus comprises means for one or both of: implicitly activating the cell discontinuous transmission configuration; or activating the cell discontinuous transmission configuration in response to receiving an activation message.

According to some examples, the one or more network messages comprises one or more short messages or one or more paging messages.

According to some examples, the one or more network messages comprise at least one of Earthquake and Tsunami Warning System and Commercial Mobile Alert System messages.

According to some examples, the apparatus comprises a user device.

According to some examples, the means comprises at least one processor; and at least one memory storing instructions that, when executed by the at least one processor, cause the performance of the apparatus.

According to a second aspect there is provided an apparatus comprising: at least one processor; and at least one memory storing instructions that, when executed by the at least one processor, cause the apparatus at least to perform: receiving configuration information, the configuration information comprising at least one of a cell discontinuous transmission configuration or a network message configuration; performing a determination of at least one condition for monitoring for one or more network messages; and monitoring for one or more network messages, based at least in part on the configuration information and the determination of at least one condition.

According to a third aspect there is provided a method performed by an apparatus, the method comprising: receiving configuration information, the configuration information comprising at least one of a cell discontinuous transmission configuration or a network message configuration; performing a determination of at least one condition for monitoring for one or more network messages; and monitoring for one or more network messages, based at least in part on the configuration information and the determination of at least one condition.

According to some examples, the determination of at least one condition comprises a determination of whether the cell is inaccessible for radio resource control idle, radio resource control inactive, or legacy devices.

According to some examples, when the cell is inaccessible the cell is barred.

According to some examples, when it is determined that the cell is inaccessible, then the method comprises monitoring for network messages in one or more paging occasions during cell discontinuous transmission active time.

According to some examples, when it is determined that the cell is not inaccessible, then the method comprises monitoring for network messages in one or more paging occasions.

According to some examples, when it is determined that the cell is not inaccessible, then the method comprises monitoring for network messages in one or more paging occasions during either of cell discontinuous transmission active or inactive time.

According to some examples, the determination of at least one condition comprises a determination of whether an indication has been received which indicates that the one or more network messages will be transmitted by the network during cell discontinuous transmission active time.

According to some examples, when it is determined that the indication has been received, the method comprises monitoring for the one or more network messages in one or more paging occasions during cell discontinuous transmission active time.

According to some examples, the received configuration information includes a paging occasion configuration for receiving one or more network messages during (i) a cell discontinuous transmission non-active time or (ii) in any paging occasion.

According to some examples, a paging cycle is configured so that paging occasions are less frequent during (i) an indicated cell discontinuous transmission non-active time, compared to (ii) any paging occasion.

According to some examples, the method comprises one or both of: implicitly activating the cell discontinuous transmission configuration; or activating the cell discontinuous transmission configuration in response to receiving an activation message.

According to some examples, the one or more network messages comprises one or more short messages or one or more paging messages.

According to some examples, the one or more network messages comprise at least one of Earthquake and Tsunami Warning System and Commercial Mobile Alert System messages.

According to some examples, the apparatus comprises a user device.

According to a fourth aspect there is provided a computer program comprising instructions which, when executed by an apparatus, cause the apparatus to perform at least the following: receiving configuration information, the configuration information comprising at least one of a cell discontinuous transmission configuration or a network message configuration; performing a determination of at least one condition for monitoring for one or more network messages; and monitoring for one or more network messages, based at least in part on the configuration information and the determination of at least one condition.

According to a fifth aspect there is provided a non-transitory computer readable medium comprising program instructions that, when executed by an apparatus, cause the apparatus to perform at least the following: receiving configuration information, the configuration information comprising at least one of a cell discontinuous transmission configuration or a network message configuration; performing a determination of at least one condition for monitoring for one or more network messages; and monitoring for one or more network messages, based at least in part on the configuration information and the determination of at least one condition

### BRIEF DESCRIPTION OF THE DRAWINGS

Some example embodiments will now be described, by way of example only, with reference to the accompanying drawings in which:
Figure 1 provides an overall flow-chart of an example method;
Figures 2 to 4 are signalling diagrams according to certain aspects of the overall method;
Figure 5 illustrates some features of terminal device 500 in more detail;
Figure 6 shows some features of base station 600 in more detail;
Figure 7 is a flow chart of a method according to an example; and
Figure 8 shows a schematic representation of non-volatile memory media storing instructions and/or parameters.

### DETAILED DESCRIPTION

Embodiments of the present disclosure relate to cell discontinuous transmission (cell DTX), and additionally or alternatively cell discontinuous reception (cell DRX). Collectively, DTX and/or DRX can be referred to as a discontinuous mode or a discontinuous state of a cell.

Network energy saving is of importance for environmental sustainability, for example to reduce environmental impact, and for operational cost savings. As 5G is becoming pervasive across industries and geographical areas, handling more advanced services and applications requiring high data rates such as extended reality (XR), networks are becoming denser, use more antennas, and may require larger bandwidths and more frequency bands. The environmental impact of 5G needs to stay under control, and ways to improve network energy savings need to be developed.

Functionality of cell DTX is that the network (NW) will configure a cell to be periodically active for a certain duration, and non-active for a remainder of the period (cell DTX cycle). When the cell is "DTX active", the cell will transmit or be enabled to transmit at least one of data, reference signals, and/or control information. When the cell is in the DTX non-active state the cell will not be enabled to perform the transmission or reception.

It has been proposed that there shall be no impact on Synchronization Signal and PBCH block (SSB) due to cell DTX (i.e. SSBs are transmitted independently of the cell DTX state. Furthermore, discussions are ongoing in RAN1 and RAN2 whether other signals/channels can be exempted from DTX i.e. whether signals/channels can still be transmitted during cell DTX non-active time. It has also been proposed that impact to radio resource control (RRC) Idle/Inactive UEs shall be avoided. Therefore, RRC Idle/Inactive UEs can assume that paging procedure works as per legacy specification, independently of the cell DTX state.

It is known for networks to transmit network messages including paging messages and/or so called short messages. Short messages have been defined in 3GPP TS 38.331 (see Table 6.5-1), which is reproduced below.

| **Bit** | **Short Message** |
|---|---|
| 1 | ***systemInfoModification*** |
| | If set to 1: indication of a BCCH modification other than SIB6, SIB7 and SIB8. |
| 2 | ***etwsAndCmasIndication*** |
| | If set to 1: indication of an ETWS primary notification and/or an ETWS secondary notification and/or a CMAS notification. |
| 3 | ***stopPagingMonitoring*** |
| | This bit can be used for only operation with shared spectrum channel access and if *nrofPDCCH-MonitoringOccasionPerSSB-InPO* is present. |
| | If set to 1: indication that the UE may stop monitoring PDCCH occasion(s) for paging in this Paging Occasion as specified in TS 38.304 [20], clause 7.1. |
| 4 | ***systemlnfoModification-eDRX*** |
| | If set to 1: indication of a BCCH modification other than SIB6, SIB7 and SIB8. This indication applies only to UEs using eDRX cycle longer than the BCCH modification period. |
| 5-8 | Not used in this release of the specification, and shall be ignored by UE if received. |

It may therefore be considered that the network may transmit short messages (that may contain ETWS (Earthquake and Tsunami Warning System) and CMAS (Commercial Mobile Alert System) notifications) in the paging DCI (downlink control information) for UEs in any RRC state, including RRC Connected state. Short messages are defined in 3GPP TS 38.331 (see Table 6.5-1: Short Messages). Currently, a UE in the RRC Connected state has some freedom to monitor for the short message in any paging occasion (at least) once every defaultPagingCycle. Therefore, the RRC Connected UE can then also assume that the short message will continue to be available in any Paging Occasion, independently of the cell DTX state.

However, in certain cases the cell may want to prevent access for legacy and RRC Idle/Inactive UEs. In such a scenario, it may be desirable for the cell to omit the transmission of the short message during the paging occasions (POs) which occur in cell DTX non-active time, to further increase the energy saving potential. However, this may prevent the RRC Connected UE from receiving the short message outside the POs falling during the cell DTX active time, which may not be tolerable.

As will be discussed in more detail, the present disclosure proposes that an RRC Connected UE may determine when to monitor for network messages, such as paging messages or short messages (as defined in 3GPP TS 38.331), when a cell is configured with DTX. In examples, this is performed without requiring the network (NW) to send a paging DCI including the network message during the cell DTX non-active time. For example, the NW may not send it when legacy RRC Idle/Inactive UEs are not camping in the cell.

In some examples, the UE monitors for the network message only in a paging occasion (PO) during the cell DTX active time when any of the following conditions (i) to (iii) is satisfied, while the UE can omit the monitoring during the cell DTX non-active time.
(i) The network has explicitly indicated the network message is only transmitted during the cell DTX active time. In some examples, this indication can be transmitted as part of the cell DTX configuration via an RRC message (or information element) or the paging cycle configuration via an SIB. In some examples, information about restricting the PO(s) in which the UE has to monitor during the cell DTX time can be further provided by the network to the UE. For example, a dedicated search space can be defined for this purpose, which can have more infrequent POs.
(ii) The UE has determined the cell is inaccessible for RRC Idle/Inactive and/or legacy UEs. In some examples the cell may be made inaccessible for legacy UEs that do not support Rel-18 Network Energy Saving (NES), and/or any RRC Idle/Inactive UEs. Otherwise, the cell may be inaccessible to any UE, according to legacy approach. According to some examples, where the cell is inaccessible to a UE, it may be considered that the cell is barred.
(iii) Cell DTX is configured and activated.

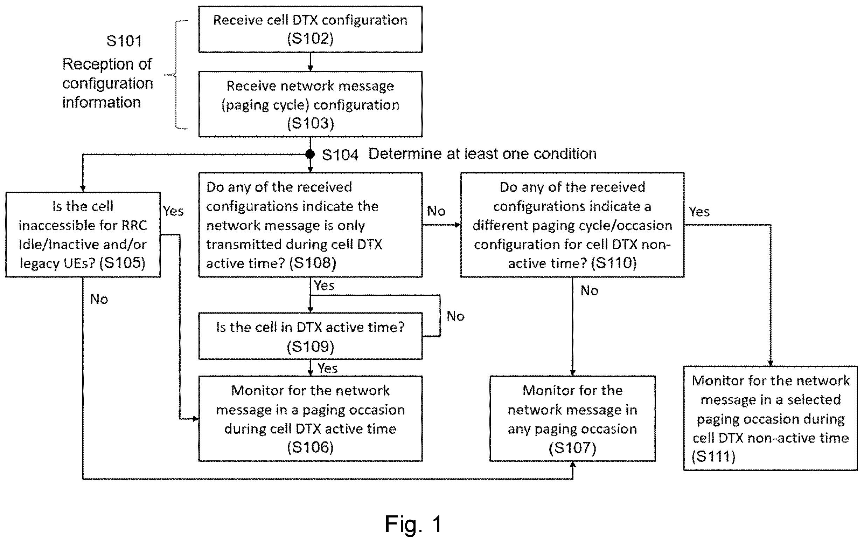

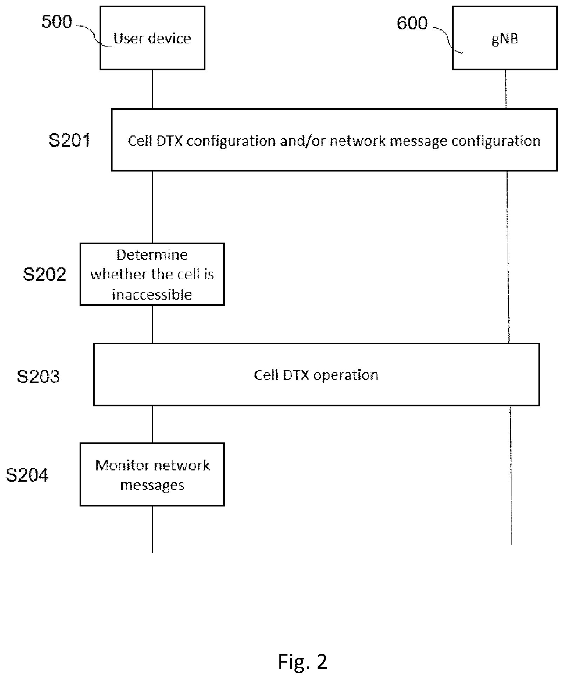

Some example embodiments will now be discussed in further detail with reference to Figures 1 to 4, where Figure 1 provides an overall flow-chart of an example method and Figures 2 to 4 are signaling diagrams according to certain aspects of the overall method, showing communication between a UE 500 and a base station or gNB 600. Figure 1 is viewed from the perspective of UE 500.

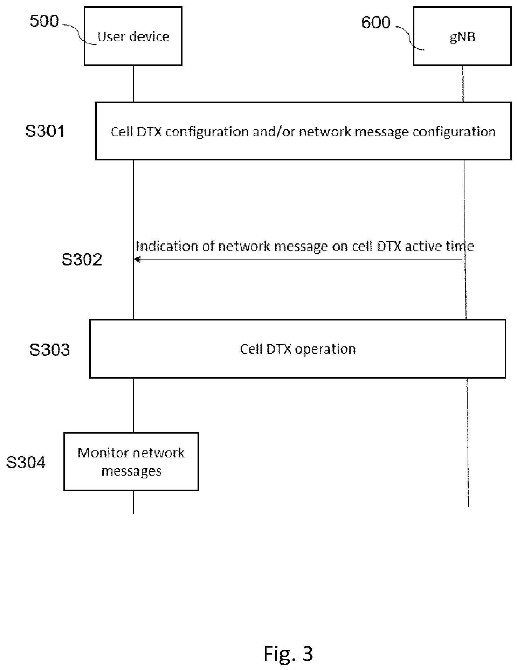

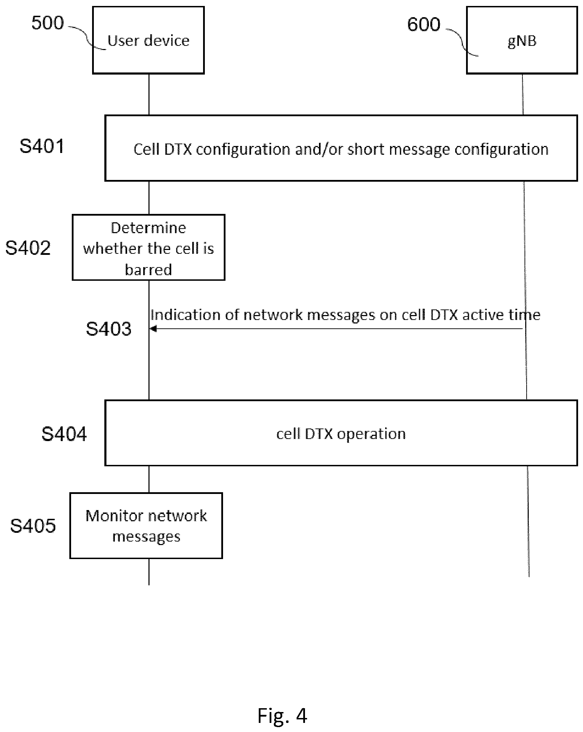

Referring to Figure 1, at S101 the UE 500 receives configuration information from the NW entity 600. The configuration information may comprise a cell DTX configuration, as shown at S102. Additionally or alternatively, the configuration information may comprise a network message configuration, as shown at S103. For example, the network message configuration may comprise a paging cycle configuration. A network message may for example comprise at least one short message (as defined in 3GPP TS 38.331) and/or at least one paging message. It is to be noted that S201 in Figure 2, S301 in Figure 3, and S401 in Figure 4 are analogous to S101 in Figure 1.

The method then proceeds to S104, where a determination is made of at least one condition to monitor one or more network conditions. In other words, it is checked whether a condition is met. In some examples, when the condition is met then network messages are monitored in a certain way. For example, the monitoring of network messages may be conducted in a manner dependent on the received configuration information (S101) and the determination of the condition.

Reference is first made to the left-hand side (initially) of Figure 1, in conjunction with Figure 2.

At S105, the determination of at least one condition comprises a determination of whether the cell is inaccessible to RRC idle, RRC inactive, or legacy devices (i.e. devices that are not Rel-18 compatible). This is also shown as S202 in Figure 2. If the determination at S105 is "yes" (i.e. cell is inaccessible), then the method proceeds to S106 where the UE 500 monitors for the network message in a PO during cell DTX active time. In other words, the cell is inaccessible or barred during cell DTX inactive time. Or in other words the UE 500 monitors for the network message in a PO during cell DTX active time only.

If the determination at S105 is "no" (i.e. cell is not inaccessible, or in other words is accessible), then the method proceeds to S107. At S107 the UE monitors for network messages in any PO. In other words, it may be considered that at S107 the UE monitors for network messages in one or more POs during either cell DTX active or inactive time.

With reference to Figure 2, Cell DTX operation (e.g., including S106 and/or S107) is schematically shown at S203, and the UE monitoring for network messages is schematically shown at S204.

Reference is now made to the central portion (initially) of Figure 1, in conjunction with Figure 3.

Following S104, at S108 the determination of at least one condition comprises a determination of whether an indication has been received which indicates that the one or more network messages will be transmitted during cell discontinuous transmission active time. In some examples, and more specifically, it may be considered that at S108 the determination of at least one condition comprises a determination of whether an indication has been received which indicates that the one or more network messages will be transmitted during cell discontinuous transmission active time only.

If the determination at S108 is "yes", then the method proceeds to S109. At S109, it is determined whether the cell is in DTX active time. Referring to Figures 3 and 4, receipt of indication of network messages on cell DTX active time is schematically shown at S302 or at S403. It is also to be noted that in some examples separate step S302 or S403 is not required, and instead in some examples the indication of S302 or S403 is included in the cell DTX configuration information and/or network message configuration information of S101 and S301 or S401.

If the determination at S109 is "yes", then the method proceeds to S106, where the UE monitors for network messages in a paging occasion during cell DTX active time. If the determination at S109 is "no", then the method loops back (in other words, the UE continues monitoring for cell DTX active time).

In some examples when UE 500 is configured with cell DTX there is an implicit activation based on the configuration received at S102 (it can e.g. define a certain slot where the active time starts).

Or in some examples, when the UE 500 is configured with cell DTX the UE 500 will await a further activation indication from gNB 600 before considering the cell DTX configuration i.e. before determining when the cell is in DTX active/non-active time. With reference to Figures 3 or 4, Cell DTX operation (e.g., including S106, S107, and/or S111) is schematically shown at S303 or S404, and the UE monitoring for network messages is schematically shown at S304 or S405.

Figure 4 is a combination of the steps of Figure 2 and Figure 3, and for conciseness is not discussed in further detail.

On the other hand, when the determination at S108 is "no", then the method proceeds to S110. At S110 it is determined whether the received configuration information (i.e. the configuration information received at S101) indicates a different paging cycle / paging occasion configuration for cell DTX non-active time compared to cell DTX active time. For example, the network may configure the cell DTX non-active period to have less frequent POs (for transmitting the network messages) compared to the cell DTX active period. For example this may be achieved by scaling the default paging cycle or the number of POs within the paging cycle. In this way, the network can ensure a certain maximum latency for the network messages. This may result in network energy saving. When the network configures this secondary paging/PO configuration, the UE monitors for the network messages in the cell DTX non-active period according to the secondary configuration. In one example, the network configures the UE to monitor for POs which fall within a time window compared to an SSB transmission made in the cell DTX non-active period. When the determination at S110 is "yes", the method proceeds to S111. At S111, the UE 500 monitors for the network messages in a selected PO during cell DTX non-active time.

When the determination at S110 is "no", the method proceeds to S107. At S107 the method comprises monitoring for the network message in any paging occasion. In one alternative example, the UE 500 is allowed or enabled to omit the monitoring of the network messages also in the POs falling during the cell DTX active time. The NW may notify the UE about signaling information (SI) change indication / ETWS by other means such as UE specific signaling. Alternatively, the UE is configured to postpone the monitoring for the network messages to the next cell DTX active time, if the configuration resulted in there being no PO in the current cell DTX active time, but availability of a PO in the next cell DTX active time.

It will be appreciated that, according to some examples, an RRC Connected UE can avoid futile monitoring for the network messages because the UE is aware when the cell will not transmit the network messages. Accordingly, the UE can save energy. Also, the cell can omit transmission of the network messages during the cell DTX non-active time, when there are only Release 18 RRC Connected UEs in the cell, and the cell can also save energy and signalling.

In some embodiments, step S104 of Figure 1 is not performed.

For example, in some embodiments the UE receives the configuration information at S101 or S201. The UE may determine whether the cell is inaccessible for RRC idle, inactive and/or legacy UEs (referring to S105 or S202). If the cell is inaccessible, then the UE may perform cell DTX operations based on the configuration information (referring to S106, S107, S203 and/or S204).

For example, in some embodiments the UE receives the configuration information at S101 or S301. The UE may receive an indication indicating one or more network messages are to be transmitted on the cell DTX active time (referring to S108, S110 or S302). Then the UE may perform cell DTX operations based on the configuration information (referring to S109, S106, S107, S111, S303 and/or S304).

For example, in some embodiments the UE receives the configuration information at S101 or S401. The UE may determine whether the cell is inaccessible for RRC idle, inactive and/or legacy UEs at S105 or S402. If the cell is barred and if the UE receives an indication indicating one or more network messages are to be transmitted on the cell DTX active time (referring to S108 or S403), then the UE may perform cell DTX operations based on the configuration information (referring to S109, S106, S107, S404, or S405).

In other words, in some examples the UE 500 may monitor for network messages based on the received cell DTX configuration (S102) and/or received network message configuration (S103).

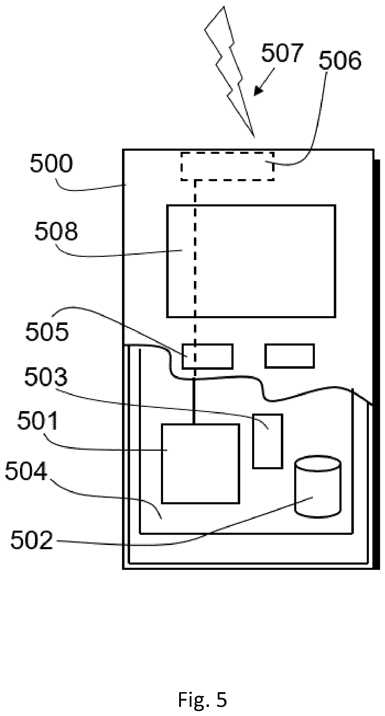

Figure 5 illustrates some features of UE or terminal device 500 in more detail. The terminal device 500 may be provided by any device capable of sending and receiving radio signals. Non-limiting examples comprise a user device, user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The terminal device 500 may provide, for example, communication of data for carrying communications. The communications may be one or more of voice, electronic mail (email), text message, multimedia, data, machine data and so on.

The terminal device 500 may receive signals over an air or radio interface 507 via appropriate apparatus for receiving and may transmit signals via appropriate apparatus for transmitting radio signals. In Figure 5, transceiver apparatus is designated schematically by block 506. The transceiver apparatus 506 may be provided for example by means of a radio part and associated antenna arrangement. The antenna arrangement may be arranged internally or externally to the mobile device.

The terminal device 500 may be provided with at least one processor 501, at least one ROM 502a, at least one RAM 502b and other possible components for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 504.

The device may optionally have a user interface such as keypad 505, touch sensitive screen or pad, combinations thereof or the like. Optionally one or more of a display 508, a speaker and a microphone may be provided depending on the type of the device.

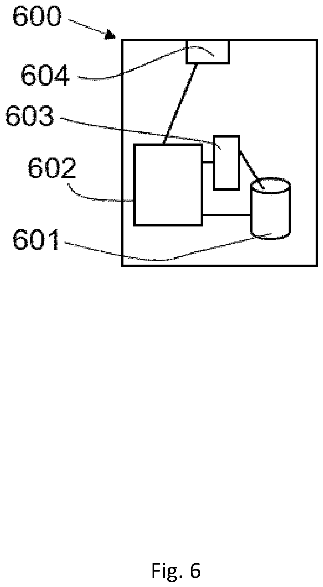

Figure 6 shows some features of base station or gNB 600 in more detail. The base station 600 can be arranged to provide control on communications in a service area. The base station 600 comprises at least one memory 601, at least one data processing unit 602, 603 and an input/output interface 604. The receiver and/or the transmitter may be implemented as a radio front end or a remote radio head. For example, the base station 600 or processor 601 can be configured to execute an appropriate software code to provide the control functions.

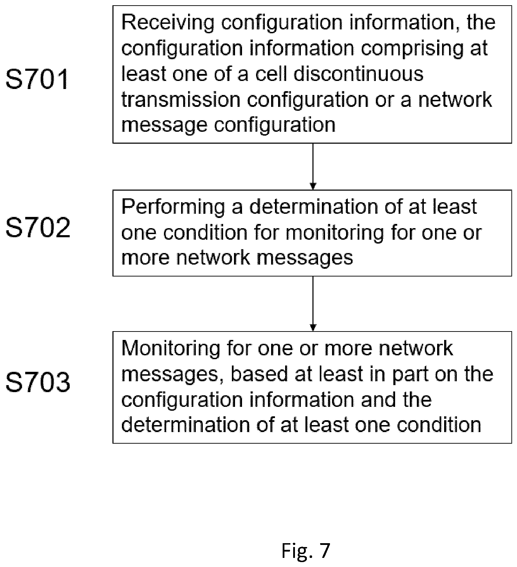

Figure 7 is a flow chart of a method according to an example. The flow chart of Figure 7 may be viewed from the perspective of an apparatus. For example, the apparatus may be a user equipment, such as user equipment 500.

As shown at S701 the method comprises receiving configuration information, the configuration information comprising at least one of a cell discontinuous transmission configuration or a network message configuration.

As shown at S702, the method comprises performing a determination of at least one condition for monitoring for one or more network messages.

As shown at S703, the method comprises monitoring for one or more network messages, based at least in part on the configuration information and the determination of at least one condition.

According to some examples, the determination of at least one condition comprises a determination of whether the cell is inaccessible for radio resource control idle, radio resource control inactive, or legacy devices.

According to some examples, when the cell is inaccessible the cell is barred.

According to some examples, when it is determined that the cell is inaccessible, then the method comprises monitoring for network messages in one or more paging occasions during cell discontinuous transmission active time.

According to some examples, when it is determined that the cell is not inaccessible, then the method comprises monitoring for network messages in one or more paging occasions.

According to some examples, when it is determined that the cell is not inaccessible, then the method comprises monitoring for network messages in one or more paging occasions during either of cell discontinuous transmission active or inactive time.

According to some examples, the determination of at least one condition comprises a determination of whether an indication has been received which indicates that the one or more network messages will be transmitted by the network during cell discontinuous transmission active time.

According to some examples, when it is determined that the indication has been received, the method comprises monitoring for the one or more network messages in one or more paging occasions during cell discontinuous transmission active time. According to some examples, the received configuration information includes a paging occasion configuration for receiving one or more network messages during (i) a cell discontinuous transmission non-active time or (ii) in any paging occasion. According to some examples, a paging cycle is configured so that paging occasions are less frequent during (i) an indicated cell discontinuous transmission non-active time, compared to (ii) any paging occasion.

According to some examples, the method comprises one or both of: implicitly activating the cell discontinuous transmission configuration; or activating the cell discontinuous transmission configuration in response to receiving an activation message.

According to some examples, the one or more network messages comprises one or more short messages or one or more paging messages.

According to some examples, the one or more network messages comprise at least one of Earthquake and Tsunami Warning System and Commercial Mobile Alert System messages.

According to some examples, the apparatus comprises a user device.

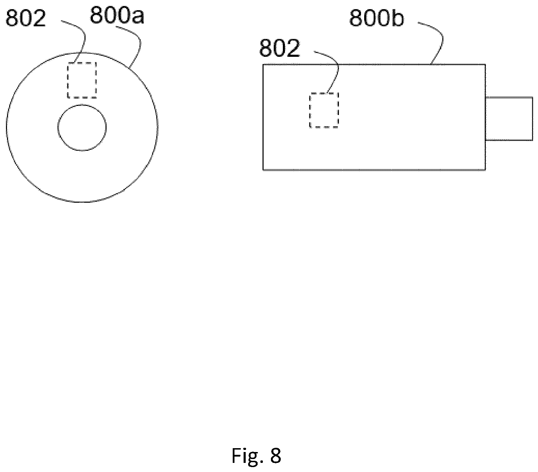

Figure 8 shows a schematic representation of non-volatile memory media 800a (e.g. computer disc (CD) or digital versatile disc (DVD)) and 800b (e.g. universal serial bus (USB) memory stick) storing instructions and/or parameters 802 which when executed by a processor allow the processor to perform one or more of the steps of the method of Figure 7.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems, such as 6G. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. Likewise, phrases such as "X and/or Y" or "X/Y" can be considered to cover either X or Y alone, or X and Y together.

Where it is said that a node or element (e.g. UE or gNB) "determines" information or the like, this may be considered to cover various ways in which that node becomes aware of or obtains that information. For example, determining may include performing one or more processing steps. Determining may also cover receiving the information, for example from another entity.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM). The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples. Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. An apparatus comprising:
means for receiving configuration information, the configuration information comprising at least one of a cell discontinuous transmission configuration or a network message configuration;
means for performing a determination of at least one condition for monitoring for one or more network messages; and
means for monitoring for one or more network messages, based at least in part on the configuration information and the determination of at least one condition.

2. An apparatus according to claim 1, wherein the determination of at least one condition comprises a determination of whether the cell is inaccessible for radio resource control idle, radio resource control inactive, or legacy devices.

3. An apparatus according to claim 2, wherein when the cell is inaccessible the cell is barred.

4. An apparatus according to claim 2 or claim 3, wherein when it is determined that the cell is inaccessible, then the means for monitoring is arranged to monitor for network messages in one or more paging occasions during cell discontinuous transmission active time.

5. An apparatus according to claim 2 or claim 3, wherein when it is determined that the cell is not inaccessible, then the means for monitoring is arranged to monitor for network messages in one or more paging occasions.

6. An apparatus according to any of claims 2 to 5, wherein the determination of at least one condition comprises a determination of whether an indication has been received which indicates that the one or more network messages will be transmitted by the network during cell discontinuous transmission active time.

7. An apparatus according to claim 6, wherein when it is determined that the indication has been received, the means for monitoring is arranged to monitor for the one or more network messages in one or more paging occasions during cell discontinuous transmission active time.

8. An apparatus according to claim 6, wherein the received configuration information includes a paging occasion configuration for receiving one or more network messages during (i) a cell discontinuous transmission non-active time or (ii) in any paging occasion.

9. An apparatus according to claim 8, wherein a paging cycle is configured so that paging occasions are less frequent during (i) an indicated cell discontinuous transmission non-active time, compared to (ii) any paging occasion.

10. An apparatus according to any of claims 1 to 9, comprising means for one or both of: implicitly activating the cell discontinuous transmission configuration; or activating the cell discontinuous transmission configuration in response to receiving an activation message.

11. An apparatus according to any of claims 1 to 10, wherein the one or more network messages comprises one or more short messages or one or more paging messages.

12. An apparatus according to any of claims 1 to 11, wherein the one or more network messages comprise at least one of Earthquake and Tsunami Warning System and Commercial Mobile Alert System messages.

13. An apparatus according to any of claims 1 to 12, wherein the apparatus comprises a user device.

14. A method performed by an apparatus, the method comprising:
receiving configuration information, the configuration information comprising at least one of a cell discontinuous transmission configuration or a network message configuration;
performing a determination of at least one condition for monitoring for one or more network messages; and
monitoring for one or more network messages, based at least in part on the configuration information and the determination of at least one condition.

15. A computer program comprising instructions which, when executed by an apparatus, cause the apparatus to perform at least the following:
receiving configuration information, the configuration information comprising at least one of a cell discontinuous transmission configuration or a network message configuration;
performing a determination of at least one condition for monitoring for one or more network messages; and
monitoring for one or more network messages, based at least in part on the configuration information and the determination of at least one condition.
